# EUROPÄISCHE PATENTANMELDUNG

(11) **EP 3 026 322 A1**
(43) Veröffentlichungstag der Anmeldung: **01.06.2016**
(21) Anmeldenummer: 14004005.6
(22) Anmeldetag: 27.11.2014
(51) Int. Cl.: F17C 5/04, F17C 7/02

(54) **Speichereinrichtung für unterkühlte kryogene Flüssigkeiten**

(71) Anmelder: Linde Aktiengesellschaft, 80331 München (DE)
(72) Erfinder: Walz, Andreas, 82515 Wolfratshausen (DE); Posselt, Heinz, 83043 Bad Aibling (DE); Ehegartner, Florian, 84524 Neuötting (DE)
(74) Vertreter: Zahn, Christoph

(57) **Zusammenfassung**

Die Erfindung betrifft eine Speichereinrichtung (1) zur Bereitstellung einer unterkühlten kryogenen Flüssigkeit, mit einem ersten Behälter (10), der einen Innenraum (I) umgibt, der bis zu einem ersten Pegel (P') mit einer unterkühlten, kryogenen Flüssigkeit gefüllt ist, und einem Druckerhöhungsmittel (30), das dazu ausgebildet ist, den Druck der kryogenen Flüssigkeit im ersten Behälter (10) zu erhöhen. Erfindungsgemäß ist vorgesehen, dass zur Aufrechterhaltung des unterkühlten Zustands der kryogenen Flüssigkeit (F) die Speichereinrichtung (1) ein Bad (B) aus einer weiteren kryogenen Flüssigkeit (F') aufweist, das in thermischen Kontakt mit der kryogenen Flüssigkeit (F) im ersten Behälter (10) steht, wobei die weitere kryogene Flüssigkeit (F) einen Druck aufweist, der z.B. bis auf den Druck der Umgebung der Speichereinrichtung (1) abgesenkt ist. Weiterhin betrifft die Erfindung ein entsprechendes Verfahren.

## Beschreibung

Die Erfindung betrifft eine Speichereinrichtung sowie ein Verfahren zum Bereitstellen einer unterkühlten, kryogenen Flüssigkeit.

Bei einer kryogenen Flüssigkeit handelt es sich im Sinne der vorliegenden Erfindung insbesondere um ein tiefkalt verflüssigtes Gas, also ein Gas, das bei Normaldruck (oder ggf. bei einem höheren Druck) bei einer Temperatur weit unterhalb der Raumtemperatur flüssig ist, wie z.B. Wasserstoff, Stickstoff, Sauerstoff oder Helium. CO₂ kann ebenfalls als tiefkalt verflüssigtes Gas vorliegen, allerdings erst bei einem Druck größer gleich 5,19 bar. Tiefkalt verflüssigte Gase weisen insbesondere bei Normaldruck z.B. eine Temperatur im Bereich von -270 bis -50 °C auf.

Bei gewissen technischen Anwendungen müssen derartige kryogene Flüssigkeiten nicht nur bei einem erhöhten Druck, sondern auch in einem unterkühlten Zustand bereitgestellt werden. Von einer Unterkühlung einer Flüssigkeit wird gesprochen, wenn die Flüssigkeit bei einem gegebenen Druck eine Temperatur unterhalb des thermodynamischen Gleichgewichts-Siedepunkts aufweist.

Grundsätzlich kann ein konstanter, erhöhter Druck der kryogenen Flüssigkeit erzeugt werden, indem im Kopfraum des verwendeten kryogenen Speichertanks der Druck z.B. mit einem Druckaufbauverdampfer erhöht wird. Allerdings führt hierbei die Einkondensation des so erzeugten Gases an der Flüssigkeitsgrenzfläche und die Wärmeleitung der kryogenen Flüssigkeit dazu, dass sich das gesamte Inventar des Speichertanks nach einer gewissen Zeit so weit erwärmt, bis das neue thermodynamische Gleichgewicht erreicht ist. Somit geht die gewünschte Unterkühlung des kryogenen Inventars wieder verloren.

Als grundsätzliche Alternative kommt der Einsatz von kryogenen Pumpen in Frage, der jedoch mit erhöhten Investitions- und Betriebskosten verbunden ist.

Der Erfindung liegt hiervon ausgehend die Aufgabe zugrunde, den unterwünschten Verlust der Unterkühlung der kryogenen Flüssigkeit zu verhindern bzw. diesem entgegenzuwirken.

Diese Aufgabe wird durch eine Speichereinrichtung mit den Merkmalen des Anspruchs 1 gelöst. Vorteilhafte Ausgestaltungen der Erfindung sind in den Unteransprüchen angegeben und werden nachfolgend beschrieben.

Gemäß Anspruch 1 weist die Speichereinrichtung zur Bereitstellung einer unterkühlten, kryogenen Flüssigkeit einen ersten Behälter auf, der einen Innenraum umgibt, der bis zu einem ersten Pegel mit der unterkühlten, kryogenen Flüssigkeit gefüllt ist, wobei insbesondere sich eine gasförmige Phase des kryogenen Mediums in einem oberhalb des ersten Pegels liegenden Kopfraum des ersten Behälters sammelt, sowie ein Druckerhöhungsmittel, das dazu dient, den gewünschten Druck der kryogenen Flüssigkeit im ersten Behälter einzustellen. Erfindungsgemäß ist nun zur Aufrechterhaltung des unterkühlten Zustands der kryogenen Flüssigkeit ein Bad einer weiteren kryogenen Flüssigkeit vorgesehen, das im thermischen Kontakt mit der kryogenen Flüssigkeit im ersten Behälter steht, wobei die weitere kryogene Flüssigkeit einen Druck aufweist, der niedriger ist als der Druck der kryogenen Flüssigkeit im ersten Behälter (wobei insbesondere der Druck der weiteren kryogenen Flüssigkeit gleich dem Druck in der Umgebung der Speichereinrichtung sein kann und insbesondere auch unter diesen Umgebungsdruck abgesenkt werden kann bzw. liegen kann). Diese weitere kryogene Flüssigkeit ist bevorzugt im thermodynamischen Gleichgewicht mit dem Druck im Kopfraum des Behälters, in dem sie gespeichert ist. Der in der Umgebung der Speichereinrichtung liegende Druck wird hierin auch als Umgebungsdruck bezeichnet. Hierbei handelt es sich bevorzugt um den atmosphärischen Normaldruck, der in etwa bei 1 bar liegt.

Mit anderen Worten kann also die unerwünschte Erwärmung des kryogenen Inventars der Speichereinrichtung verhindert werden, wenn der Inhalt der Speichereinrichtung bzw. die besagte kryogene Flüssigkeit durch ein Bad eines weiteren Kryogens im thermodynamischen Gleichgewicht bei einem niedrigeren Druck, bevorzugt Umgebungsdruck, ständig gekühlt wird. Im Gegensatz zur unterkühlten, kryogenen Flüssigkeit im ersten Behälter befindet sich also das (das Bad bildende) weitere Kryogen bevorzugt bzw. idealerweise stets im thermodynamischen Gleichgewicht bei Umgebungsdruck bzw. dem besagten niedrigeren Druck.

Mit Hilfe dieses Aufbaus kann die Unterkühlung des aufgedrückten Inventars eines kryogenen Tanks bei einer nur relativ geringen Erhöhung der Verdampfungsverluste über einen langen Zeitraum mit Vorteil aufrechterhalten werden.

Gemäß einer bevorzugten Ausführungsform der erfindungsgemäßen Speichereinrichtung ist vorgesehen, dass die weitere kryogene Flüssigkeit (auch als weiteres Kryogen bezeichnet) gleich der kryogenen Flüssigkeit ist. D.h., bei der kryogenen Flüssigkeit und der weiteren kryogenen Flüssigkeit handelt es sich um den gleichen Stoff oder um das gleiche Stoffgemisch.

Gemäß einer weiteren bevorzugten Ausführungsform der erfindungsgemäßen Speichereinrichtung ist vorgesehen, dass der erste Behälter als Innenbehälter ausgebildet ist, wobei die Speichereinrichtung weiterhin einen Außenbehälter aufweist, wobei der Innenbehälter in dem Außenbehälter angeordnet ist, so dass zwischen dem Innenbehälter und dem Außenbehälter ein Zwischenraum ausgebildet ist, in dem sich das aus der weiteren kryogenen Flüssigkeit gebildete Bad befindet.

Bevorzugt weist der Außenbehälter eine thermische Dämmung auf, um einem Wärmeeintrag aus der Umgebung der Speichereinrichtung in den Außenbehälter entgegen zu wirken. Hierbei kann der Außenbehälter eine doppelte Wandung aufweisen, mit einer ersten Wandung, die den Innenraum des Außenbehälters umgibt, sowie mit einer weiteren zweiten Wandung, die die erste Wandung umgibt, so dass zwischen den beiden Wandungen wiederum ein Hohlraum geschaffen wird. Der Hohlraum kann evakuiert sein (und z.B. ein Vakuum aufweisen) und/oder mit einem Isoliermaterial gefüllt sein, z.B. mit einem Schüttgut (z.B. Perlite).

Insbesondere kann der Außenbehälter konzentrisch um den Innenbehälter angeordnet sein. Weiterhin kann der besagte Zwischenraum den Innenbehälter vollständig umgeben.

Bevorzugt füllt nun die weitere, das Bad bildende kryogene Flüssigkeit den Zwischenraum bis zu einem zweiten Pegel, der in vertikaler Richtung niedriger ist als der erste Pegel der kryogenen Flüssigkeit im ersten Behälter bzw. Innenbehälter, so dass eine Höhendifferenz zwischen den beiden Pegeln besteht.

Diese Höhendifferenz liegt bevorzugt in einem Bereich von 0,5 bis 1,5 m, bevorzugt in einem Bereich von 0,75 bis 1,25 m, bevorzugt in einem Bereich von 0,9 bis 1,1 m und beträgt insbesondere 1 m.

Durch die Maßnahme der vorbeschriebenen Höhendifferenz zwischen den beiden Pegeln kann der Druck im Innenbehälter besser aufrecht erhalten werden und gleichzeitig die Einkondensationsrate des aufdrückenden Gases im Innenbehälter limitiert werden.

Diese besagte Höhendifferenz kann im Betrieb durchaus etwas schwanken, bei großen Entnahmemengen wird bevorzugt der Füllstand bzw. Pegel des Bads aktiv erniedrigt.

Besonders bevorzugt handelt es sich bei der kryogenen Flüssigkeit und/oder bei der weiteren kryogenen Flüssigkeit um Stickstoff.

Bevorzugt wird der Druck der kryogenen Flüssigkeit (insbesondere Stickstoff) im ersten Behälter bzw. im Innenbehälter auf einen Druck im Bereich von 28 bis 32 bar, insbesondere 29 bis 31 bar, eingestellt, insbesondere auf einen Druck von 30 bar.

Weiterhin ist gemäß einer bevorzugten Ausführungsform der erfindungsgemäßen Speichereinrichtung vorgesehen, dass die Speichereinrichtung einen ersten Auslass zum Zuführen oder Entnehmen der unterkühlten, kryogenen Flüssigkeit aufweist, der an einem unteren Bereich, insbesondere an einer untersten Stelle, des Innenraumes des ersten Behälters mit dem Innenraum des ersten Behälters in Strömungsverbindung steht.

Weiterhin ist gemäß einer bevorzugten Ausführungsform der erfindungsgemäßen Speichereinrichtung vorgesehen, dass die Speichereinrichtung einen zweiten Auslass zum Zuführen oder Entnehmen der weiteren kryogenen Flüssigkeit aufweist, der an einem unteren Bereich, insbesondere an einer untersten Stelle, des Zwischenraumes des Außenbehälters mit dem Zwischenraum in Strömungsverbindung steht.

Die Zufuhr und die Entnahme der kryogenen Flüssigkeiten sowohl im eigentlichen Innenbehälter als auch im umgebenden Bad von unten her ist von Vorteil, da hierdurch die Temperaturstratifikation, die sich zwischen den beiden Flüssigkeitsniveaus einstellt, nicht gestört wird.

Bei dem Druckerhöhungsmittel handelt es sich bevorzugt um einen Druckaufbauverdampfer, der dazu ausgebildet ist, einen Teil der im Innenraum des ersten Behälters gespeicherten flüssigen Phase aus dem Innenbehälter abzuziehen, durch Zuführung von Wärme zu verdampfen und die gasförmige Phase in den Innenbehälter (insbesondere in den Kopfraum) einzuleiten, so dass sich der Druck im ersten Behälter bzw. Innenbehälter entsprechend erhöht.

Weiterhin wird das der Erfindung zugrunde liegende Problem durch ein Verfahren mit den Merkmalen des Anspruchs 11 gelöst.

Danach sieht das erfindungsgemäße Verfahren vor, dass eine unterkühlte kryogene Flüssigkeit in einer Speichereinrichtung bereitgestellt wird, gegebenenfalls der Druck der kryogenen Flüssigkeit auf einen vorbestimmten Druck erhöht bzw. gebracht wird und die kryogene Flüssigkeit zur Aufrechterhaltung des unterkühlten Zustands gekühlt wird, indem die kryogene Flüssigkeit mit einem Bad einer weiteren kryogenen Flüssigkeit in thermischen Kontakt gebracht wird, deren Druck niedriger ist als der Druck der kryogenen Flüssigkeit, wobei der Druck der weiteren kryogenen Flüssigkeit idealerweise bzw. bevorzugt dem in einer Umgebung der Speichereinrichtung herrschenden Druck gleich ist und insbesondere auch unter diesem Umgebungsdruck liegen kann.

Gemäß einer bevorzugten Ausgestaltung des erfindungsgemäßen Verfahrens ist vorgesehen, dass die weitere kryogene Flüssigkeit gleich der kryogenen Flüssigkeit ist, es sich also um den gleichen Stoff bzw. das gleiche Stoffgemisch handelt.

Gemäß einer weiteren bevorzugten Ausgestaltung des erfindungsgemäßen Verfahrens ist vorgesehen, dass der erste Behälter als Innenbehälter ausgebildet ist, der in einem Außenbehälter angeordnet ist, so dass zwischen dem Innenbehälter und dem Außenbehälter ein Zwischenraum gebildet wird, in den das Bad aus der weiteren kryogenen Flüssigkeit eingefüllt wird.

Hierbei wird der Zwischenraum bevorzugt bis zu einem zweiten Pegel mit der das Bad bildenden weiteren kryogenen Flüssigkeit gefüllt, wobei bevorzugt die beiden Pegel so geregelt oder gesteuert werden, dass der zweite Pegel in vertikaler Richtung niedriger ist als der erste Pegel, so dass bevorzugt stets eine Höhendifferenz zwischen den beiden Pegeln besteht. Diese nimmt bevorzugt die oben angegebenen Werte an.

Besonders bevorzugt ist bei dem erfindungsgemäßen Verfahren vorgesehen, dass die kryogene Flüssigkeit und/oder die weitere kryogene Flüssigkeit flüssiger Stickstoff ist.

Bevorzugte Druckwerte der unterkühlten bzw. zu unterkühlenden kryogenen Flüssigkeit sind oben angegeben, insbesondere für den Fall von Stickstoff.

Weiterhin wird bevorzugt bei dem erfindungsgemäßen Verfahren die jeweilige kryogene Phase von unten her (siehe oben) in den Innenbehälter bzw. in den Außenbehälter gegeben oder aus dem jeweiligen Behälter abgezogen, insbesondere um die oben genannte Höhendifferenz sicherzustellen.

Die Druckerhöhung der kryogenen Flüssigkeit im ersten Behälter wird bevorzugt durch Verdampfen eines Teils der kryogenen Flüssigkeit aus dem ersten Behälter vorgenommen (vergleiche oben).

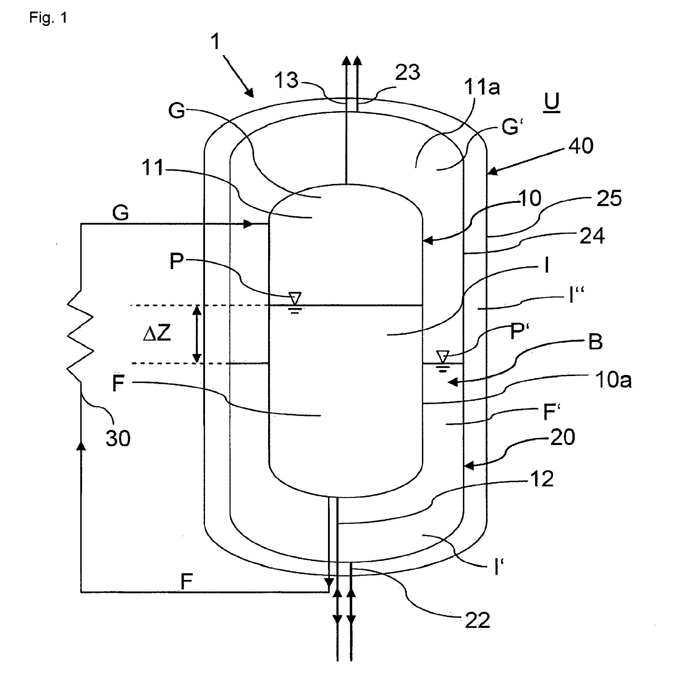

Weitere Merkmale und Vorteile der Erfindung sollen bei der nachfolgenden Figurenbeschreibung eines Ausführungsbeispiels der Erfindung anhand der Figur 1 erläutert werden. Diese zeigt eine schematische Schnittansicht einer erfindungsgemäßen Speichereinrichtung zur Bereitstellung einer unterkühlten, kryogenen Flüssigkeit.

Figur 1 zeigt eine erfindungsgemäße Speichereinrichtung 1 zur Bereitstellung einer unterkühlten kryogenen Flüssigkeit F, die z.B. für eine weitere Verwendung, z.B. zum Kühlen von Werkzeugen verwendet werden soll.

Die Speichereinrichtung weist einen in vertikaler Richtung erstreckten ersten Behälter 10 in Form eines drucktragenden Innenbehälters auf, der einen Innenraum I umgibt, der bis zu einem ersten Pegel P mit einer unterkühlten, kryogenen Flüssigkeit F gefüllt ist. In dem oberhalb des ersten Pegels P befindlichen Kopfraum 11 des Innenbehälters 10 sammelt sich die gasförmige Phase G des kryogenen Mediums F an.

Zum Erhöhen des Drucks der kryogenen Flüssigkeit F im Innenbehälter 10 ist ein Druckaufbauverdampfer 30 vorgesehen, der z.B. dazu ausgebildet ist, kryogene Flüssigkeit F aus dem Innenraum I des Innenbehälters 10 abzuziehen, zu verdampfen und die gasförmige Phase G in den Kopfraum 11 einzuleiten, wodurch der Druck im Innenbehälter 10 bzw. im Innenraum I erhöht wird. Der Druckaufbauverdampfer 30 ist hierzu üblicherweise außerhalb des Innenbehälters 10 sowie insbesondere außerhalb eines Außenbehälters 20 (siehe unten) angeordnet und verdampft insbesondere die flüssige Phase F unter Verwendung von Wärme aus der Umgebung U der Speichereinrichtung 1.

Um gleichzeitig die gewünschte Unterkühlung der kryogenen Flüssigkeit F aufrecht zu erhalten, ist in einem den Innenbehälter 10 umgebenden Zwischenraum I', der durch den Innenbehälter 10 und den den Innenbehälter 10 umgebenden Außenbehälter 20 gebildet wird, ein Bad B aus dem bevorzugt gleichen kryogenen Medium F' vorgesehen, das einen Pegel P' aufweist und das über eine Wandung 10a des Innenbehälters 10 in thermischen Kontakt mit der kryogenen Flüssigkeit F im Innenbehälter 10 steht und daher dieser Wärme entziehen kann. Der Zwischenraum I' weist ebenfalls einen Kopfraum 11 a oberhalb des Pegels P' auf, in dem sich die gasförmige Phase G' der weiteren kryogenen Flüssigkeit F' sammeln kann.

Der Außenbehälter 20 kann eine thermische Isolierung 40 aufweisen, z.B. durch eine doppelte Wandung des Außenbehälters 20, aufweisend eine erste (innere) Wandung 24 sowie eine zweite (äußere) Wandung 25, die einen den Zwischenraum I' umgebenden Hohlraum I" begrenzen, der evakuiert und/oder mit einem Isoliermaterial gefüllt sein kann (z.B. Perlite).

Im Gegensatz zur kryogenen Flüssigkeit F im Innenbehälter 10, bei der es sich insbesondere um Stickstoff handelt, der z.B. bei einem Druck von rund 30bar im Innenbehälter flüssig gespeichert wird, befindet sich das Bad B bevorzugt im thermodynamischen Gleichgewicht mit dem Druck im eigenen Kopfraum 11a, wobei die das Bad B bildende kryogene Flüssigkeit F' einen Druck aufweist, der niedriger ist als der Druck der kryogenen Flüssigkeit F und der idealerweise dem Umgebungsdruck (insbesondere Normaldruck) entspricht. Hierdurch wird eine Kühlung der unterkühlten kryogenen Flüssigkeit F bereitgestellt, die die Unterkühlung aufrecht erhält bzw. einem Verlust der Unterkühlung entgegenwirkt.

Zur Aufrechterhaltung des Druckes im Innenbehälter und zur Limitierung der Einkondensationsrate des aufdrückenden Gases G im Innenbehälter wird der Flüssigkeitsspiegel (zweiter Pegel P') des äußeren Bades B bevorzugt stets unterhalb des Flüssigkeitsspiegels (erster Pegel P) des eigentlichen Innenbehälters gehalten. Bevorzugt wird eine Höhendifferenz von ca. 1 m. Diese Höhendifferenz kann durchaus etwas schwanken, bei großen Entnahmemengen muss aber der Füllstand P' des äußeren Kältebads B aktiv erniedrigt werden. Die Zufuhr und die Entnahme der kryogenen Flüssigkeiten F, F' sowohl im eigentlichen Innenbehälter 10 als auch im umgebenden Bad B erfolgt bevorzugt von unten über die Aus- bzw. Einlässe 12, 22, um die Temperaturstratifikation, die sich zwischen den beiden Flüssigkeitsniveaus P, P' einstellt, nicht zu zerstören. Etwaige gasförmige Phasen können über Auslässe 13, 23 am oberen Ende des jeweiligen Behälters 10, 20 abgezogen werden.

**Bezugszeichen**

| | |
|---|---|
| 1 | Speichereinrichtung |
| 10 | Erster Behälter bzw. Innenbehälter |
| 10a | Wandung |
| 11, 11a | Kopfraum |
| 12 | Aus- bzw. Einlass |
| 13 | Auslass für gasförmige Phase |
| 20 | Außenbehälter |
| 22 | Aus- bzw. Einlass |
| 23 | Auslass für gasförmige Phase |
| 24 | Erste Wandung |
| 25 | Zweite Wandung |
| 30 | Druckaufbauverdam pfer |
| 40 | thermische Isolierung |
| B | Bad |
| F | Unterkühlte kryogene Flüssigkeit |
| F' | Weitere kryogene Flüssigkeit |
| G, G' | Gasförmige Phase |
| I | Innenraum |
| I' | Zwischenraum |
| I" | Hohlraum |
| P, P' | Pegel |
| U | Umgebung (Atmosphäre) |
| ΔZ | Vertikale Höhendifferenz der Pegel |

## Patentansprüche

1. Speichereinrichtung (1) zur Bereitstellung einer unterkühlten kryogenen Flüssigkeit (F), mit:
- einem ersten Behälter (10), der einen Innenraum (I) umgibt, der bis zu einem ersten Pegel (P') mit einer unterkühlten, kryogenen Flüssigkeit gefüllt ist, und
- einem Druckerhöhungsmittel (30), das dazu ausgebildet ist, den Druck der kryogenen Flüssigkeit im ersten Behälter (10) zu erhöhen,
**dadurch gekennzeichnet, dass**
zur Aufrechterhaltung des unterkühlten Zustands der kryogenen Flüssigkeit (F) die Speichereinrichtung (1) ein Bad (B) aus einer weiteren kryogenen Flüssigkeit (F') aufweist, das in einem thermischen Kontakt mit der kryogenen Flüssigkeit (F) im ersten Behälter (10) steht, wobei die weitere kryogene Flüssigkeit (F') einen Druck aufweist, der niedriger ist als der Druck der kryogenen Flüssigkeit (F) im ersten Behälter (10).

2. Speichereinrichtung nach Anspruch 1, **dadurch gekennzeichnet, dass** der Druck der weiteren kryogenen Flüssigkeit (F') gleich dem Druck in einer Umgebung (U) der Speichereinrichtung (1) ist.

3. Speichereinrichtung nach Anspruch 1 oder 2, **dadurch gekennzeichnet, dass** die weitere kryogene Flüssigkeit (F') gleich der kryogenen Flüssigkeit (F) ist.

4. Speichereinrichtung nach einem der vorhergehenden Ansprüche, **dadurch gekennzeichnet, dass** der erste Behälter (10) als Innenbehälter ausgebildet ist, der in einem Außenbehälter (20) angeordnet ist, so dass zwischen dem Innenbehälter (10) und dem Außenbehälter (20) ein Zwischenraum (I) gebildet wird, in dem sich das aus der weiteren kryogenen Flüssigkeit (F') gebildete Bad (B) befindet.

5. Speichereinrichtung nach Anspruch 4, **dadurch gekennzeichnet, dass** die das Bad (B) bildende weitere kryogene Flüssigkeit (F') den Zwischenraum (I') bis zu einem zweiten Pegel (P') füllt, wobei der zweite Pegel (P') in vertikaler Richtung niedriger ist als der erste Pegel (P) der kryogenen Flüssigkeit (F) im ersten Behälter (10), so dass eine Höhendifferenz (Δz) zwischen den beiden Pegeln (P, P') besteht.

6. Speichereinrichtung nach Anspruch 5, **dadurch gekennzeichnet, dass** die Höhendifferenz (Δz) in einem Bereich von 0,5 bis 1,5 m, insbesondere in einem Bereich von 0,75 bis 1,25 m, insbesondere in einem Bereich von 0,9 bis 1,1 m, insbesondere bei 1 m, liegt.

7. Speichereinrichtung nach einem der vorhergehenden Ansprüche, **dadurch gekennzeichnet, dass** die kryogene Flüssigkeit (F) und/oder die weitere kryogene Flüssigkeit (F') Stickstoff ist.

8. Speichereinrichtung nach einem der vorhergehenden Ansprüche, **dadurch gekennzeichnet, dass** der Druck der kryogenen Flüssigkeit (F) im Bereich von 5 bar bis 32bar liegt.

9. Speichereinrichtung nach einem der vorhergehenden Ansprüche, **dadurch gekennzeichnet, dass** die Speichereinrichtung (1) einen ersten Auslass (12) zum Zuführen oder Entnehmen der unterkühlten, kryogenen Flüssigkeit (F) aufweist, der an einem unteren Bereich des Innenraumes (I) des ersten Behälters (10), insbesondere an einer untersten Stelle des Innenraumes (I) des ersten Behälters, (10) mit dem Innenraum (I) des ersten Behälters (10) in Strömungsverbindung steht, und/oder dass die Speichereinrichtung (1) einen zweiten Auslass (22) zum Zuführen oder Entnehmen der weiteren kryogenen Flüssigkeit (F') aufweist, der an einem unteren Bereich des Zwischenraumes (I') des Außenbehälters (20), insbesondere an einer untersten Stelle des Zwischenraumes (I') des Außenbehälters (20), mit dem Zwischenraum (I') in Strömungsverbindung steht.

10. Speichereinrichtung nach einem der vorhergehenden Ansprüche, **dadurch gekennzeichnet, dass** das Druckerhöhungsmittel (30) ein Druckaufbauverdampfer ist.

11. Verfahren zur Bereitstellung einer unterkühlten, kryogenen Flüssigkeit (F), insbesondere unter Verwendung einer Speichereinrichtung (1) nach einem der vorhergehenden Ansprüche, wobei eine unterkühlte kryogene Flüssigkeit (F) in einer Speichereinrichtung (1) bereitgestellt wird, insbesondere der Druck der kryogenen Flüssigkeit (F) auf einen vorbestimmten Druck erhöht wird, und die kryogene Flüssigkeit (F) zur Aufrechterhaltung des unterkühlten Zustands gekühlt wird, indem die kryogene Flüssigkeit (F) mit einem Bad (B) einer weiteren kryogenen Flüssigkeit (F') in thermischen Kontakt gebracht wird, deren Druck niedriger ist als der Duck der kryogenen Flüssigkeit (F).

12. Verfahren nach Anspruch 11, **dadurch gekennzeichnet, dass** die weitere kryogene Flüssigkeit (F') gleich der kryogenen Flüssigkeit (F) ist.
